# EUROPÄISCHE PATENTSCHRIFT

(11) **EP 2 910 906 B1**
(45) Veröffentlichungstag und Bekanntmachung des Hinweises auf die Patenterteilung: **27.05.2020**
(21) Anmeldenummer: 14003688.0
(22) Anmeldetag: 31.10.2014
(51) Int. Cl.: G01F 1/716

(54) **Verfahren zum Betreiben eines kernmagnetischen Durchflussmessgeräts**
Method for operating a nuclear magnetic flow meter
Procédé de fonctionnement d'un appareil de mesure de débit à noyau magnétique

(30) Priorität: 24.02.2014 DE 102014002393; 04.07.2014 DE 102014009902
(43) Veröffentlichungstag der Anmeldung: 26.08.2015
(73) Patentinhaber: Krohne AG, 4019 Basel (CH)
(72) Erfinder: Hogendoorn, Cornelius Johannes, 4211 BG Sijk (NL); Tromp, Rutger Reinout, 3311 EM Dordrecht (NL)
(74) Vertreter: Gesthuysen Patent- und Rechtsanwälte

(56) Entgegenhaltungen:
- US-A- 4 901 018
- US-A1- 2007 114 996
- US-A1- 2011 001 474
- ISMAIL I ET AL: "Tomography for multi-phase flow measurement in the oil industry", FLOW MEASUREMENT AND INSTRUMENTATION, BUTTERWORTH-HEINEMANN, OXFORD, GB, Bd. 16, Nr. 2-3, 1. April 2005 (2005-04-01), Seiten 145-155, XP027618955, ISSN: 0955-5986 [gefunden am 2005-04-01]
- DYAKOWSKI T ET AL: "Process tomography applied to multi-phase flow measurement", MEASUREMENT SCIENCE AND TECHNOLOGY, IOP, BRISTOL, GB, Bd. 7, Nr. 3, 1. März 1996 (1996-03-01), Seiten 343-353, XP020063986, ISSN: 0957-0233, DOI: 10.1088/0957-0233/7/3/015

## Beschreibung

Die Erfindung betrifft ein Verfahren zum Betreiben eines kernmagnetischen Durchflussmessgeräts, mit einem von einem Medium durchströmbaren Messrohr und mit einer zur Bestimmung des Durchflusses des Mediums durch das Messrohr ausgebildeten Messeinrichtung, wobei die Messeinrichtung eine Magnetfelderzeugungseinrichtung zur Erzeugung eines das Medium und das Messrohr durchsetzenden Magnetfelds aufweist und zur Durchführung von kernmagnetischen Messungen in positionierbaren und in der Größe einstellbaren Messvolumen im Magnetfeld ausgebildet ist und wobei jede der kernmagnetischen Messungen das Einstellen der Größe des Messvolumens, die Positionierung des Messvolumens, die Erzeugung von das Medium anregenden Anregungssignalen, die Aussendung der Anregungssignale in das Messvolumen und die Messung der von den Anregungssignalen hervorgerufenen Echosignale umfasst.

Die Atomkerne der Elemente, die einen Kernspin besitzen, besitzen auch ein durch den Kernspin hervorgerufenes magnetisches Moment. Der Kernspin kann als ein durch einen Vektor beschreibbarer Drehimpuls aufgefasst werden und entsprechend kann auch das magnetische Moment durch einen Vektor beschrieben werden, der parallel zum Vektor des Drehimpulses ausgerichtet ist. Der Vektor des magnetischen Moments eines Atomkerns richtet sich bei Anwesenheit eines makroskopischen Magnetfelds tendenziell parallel zum Vektor des makroskopischen Magnetfelds am Ort des Atomkerns aus. Dabei präzessiert der Vektor des magnetischen Moments des Atomkerns um den Vektor des makroskopischen Magnetfelds am Ort des Atomkerns. Die Kreisfrequenz der Präzession wird als Larmorkreisfrequenz bezeichnet und ist das Produkt aus dem gyromagnetischen Verhältnis und dem Betrag der magnetischen Flussdichte am Ort des Atomkerns. Folglich ist die Larmorkreisfrequenz proportional zum Betrag der magnetischen Flussdichte am Ort des Atomkerns. Das gyromagnetische Verhältnis ist für Wasserstoffatomkerne maximal.

Eine Mehrzahl von Atomkernen in einem Volumen mit jeweils einem magnetischen Moment besitzt bei Abwesenheit eines makroskopischen Magnetfelds aufgrund der statistischen Gleichverteilung der Ausrichtungen der einzelnen magnetischen Momente der Atomkerne keine makroskopische Magnetisierung. Die Anwesenheit eines makroskopischen Magnetfelds stört die statistische Gleichverteilung der Ausrichtungen der einzelnen magnetischen Momente der Atomkerne, und es bildet es sich eine makroskopische Magnetisierung parallel zum makroskopischen Magnetfeld heraus. Der zeitliche Verlauf des Prozesses der Ausrichtung der magnetischen Momente im makroskopischen Magnetfeld ist durch die Spin-Gitter-Relaxationszeitkonstante charakterisiert und weist einen exponentiell abklingenden Verlauf auf. Die Werte der Spin-Gitter-Relaxationszeitkonstanten sind charakteristisch für verschiedene Substanzen.

Das durch das Messrohr strömende Medium kann eine oder auch mehrere Phasen beinhalten. Bei einem einphasigen Medium gehört zur Bestimmung des Durchflusses die Bestimmung der Strömungsgeschwindigkeit des Mediums im Messrohr. Zur Bestimmung des Durchflusses eines mehrphasigen Mediums kann neben der Bestimmung der Strömungsgeschwindigkeiten der Phasen durch das Messrohr auch die Bestimmung der Anteile der Phasen am Medium gehören.

Die Bestimmung der Anteile der Phasen am Medium erfordert, dass jede der Phasen Atomkerne mit magnetischen Momenten aufweist, damit die Phasen in einem Magnetfeld magnetisierbar sind, und dass die Phasen des Mediums unterschiedliche Spin-Gitter-Relaxationszeitkonstanten besitzen. Das aus Ölquellen geförderte mehrphasige Medium besteht im Wesentlichen aus den flüssigen Phasen Rohöl und Salzwasser und der gasförmigen Phase Erdgas, wobei alle Phasen Wasserstoffkerne enthalten und verschiedene Spin-Gitter-Relaxationszeitkonstanten besitzen. Daher sind kernmagnetische Durchflussmessgeräte der eingangs beschriebenen Art insbesondere auch zur Durchflussmessung des aus Ölquellen geförderten mehrphasigen Mediums geeignet.

Messverfahren zur Bestimmung der Anteile der Phasen am Medium sehen vor, dass die Magnetisierung des Mediums nach verschieden langen Einwirkdauern des von der Magnetfelderzeugungseinrichtung erzeugten Magnetfels auf das Medium durch kernmagnetische Messungen bestimmt wird. Die kernmagnetische Messung zur Bestimmung der Magnetisierung des Mediums nach einer bestimmten Einwirkdauer des Magnetfelds erfolgt durch die Messeinrichtung, indem das Medium anregende Anregungssignale erzeugt, die Anregungssignale in das Medium ausgesendet und die von den Anregungssignalen hervorgerufenen Echosignale gemessen werden. Weitergebildete Messverfahren sehen vor, dass bei einer kernmagnetischen Messung die Echosignale nur in einem Messvolumen gemessen werden, wobei das Messvolumen durch die Messeinrichtung im Magnetfeld positioniert und in der Größe eingestellt wird.

Die vor der Anregung des Mediums unkorreliert präzessierenden Vektoren der magnetischen Momente der einzelnen Atomkerne werden durch die Anregung korreliert, was zunächst feste Phasenbeziehungen zwischen den präzessierenden Vektoren der magnetischen Momente bedeutet. Mit nach der Anregung fortschreitender Zeit klingt die Korrelation aufgrund verschiedener Mechanismen jedoch exponentiell ab, was als Dephasierung bezeichnet wird und durch die Spin-Spin-Relaxationszeitkonstante charakterisiert ist. Die Werte der Spin-Spin-Relaxationszeitkonstanten sind charakteristisch für verschiedene Substanzen. Demnach weisen die Echosignale eine harmonische Schwingung auf, welche durch die Larmorkreisfrequenz und eine exponentiell abklingende Amplitude gekennzeichnet ist.

Beim Betreiben von kernmagnetischen Durchflussmessgeräten der eingangs beschriebenen Art, insbesondere bei Verwendung zur Durchflussmessung des aus Ölquellen geförderten Mediums, können sich Ablagerungen auf der Messrohrinnenfläche bilden. Die Messrohrinnenfläche bildet zusammen mit den Ablagerungen die Grenzfläche zwischen dem strömenden Medium auf der einen Seite und dem stillstehenden Messrohr und den stillstehenden Ablagerungen auf der anderen Seite. Die Grenzfläche umschließt demnach den Messrohrinnenraum. Sind keine Ablagerungen vorhanden, sind Messrohrinnenfläche und Grenzfläche deckungsgleich. Die Ablagerungen reduzieren die Querschnittsfläche des Messrohrinnenraums, wodurch der Messrohrinnenraum verkleinert wird und der Strömungswiderstand des Messrohrs steigt. Übersteigt die Reduktion des Messrohrinnenraums ein für die jeweilige Anwendung eines kernmagnetischen Durchflussmessgeräts tolerierbares Maß, sind die Ablagerungen zu entfernen. Es ist davon auszugehen, dass sich auch Ablagerungen an den Messrohrinnenwänden der übrigen Rohre bilden, durch die das Medium strömt.

Kernmagnetische Durchflussmessgeräte sind aus US 4,901,018, US 2007/0114996 A1 und US 2011/0001474 A1 bekannt.

Aufgabe der vorliegenden Erfindung ist daher die Angabe eines Verfahrens zum Betreiben eines kernmagnetischen Durchflussmessgeräts der eingangs beschriebenen Art, welches Informationen über Ablagerungen auf der Messrohrinnenwand liefert.

Die zuvor hergeleitete und aufgezeigte Aufgabe ist bei dem eingangs beschriebenen Verfahren zum Betreiben eines kernmagnetischen Durchflussmessgeräts zunächst und im Wesentlichen dadurch gelöst,
dass eine kernmagnetische Messung in einem Messvolumen durchgeführt wird und mindestens eine weitere kernmagnetische Messung in einem weiteren Messvolumen durchgeführt wird, indem die Messvolumen derart nacheinander entlang einer eine Komponente in der Messrohrquerschnittsebene aufweisenden Messstrecke positioniert werden, dass das von den Messvolumen gebildete Gesamtmessvolumen mindestens einen Anteil der Messrohrwand und mindestens einen Anteil des Mediums enthält, und dass die Echosignale aller kernmagnetischen Messungen der Position des Messvolumens der jeweiligen kernmagnetischen Messung auf der Messstrecke zugeordnet werden und mindestens eine abrupte Veränderung der Echosignale entlang der Messstrecke detektiert wird.

Die Messvolumen sind entlang der Messstrecke in der Art nacheinander positioniert, dass zwei entlang der Messstrecke aufeinanderfolgende Messvolumen sich entweder überlappen oder aneinander grenzen oder dass zwischen zwei entlang der Messstrecke aufeinanderfolgenden Messvolumen ein Abstand entlang der Messstrecke vorhanden ist. Die Größen der Messvolumen können gleich oder auch unterschiedlich gewählt werden. Zwar ist nur erforderlich, dass eine Komponente der Messstrecke in der Messrohrquerschnittsebene liegt, jedoch kann die Messstrecke auch vollständig in der Messrohrquerschnittsebene liegen. Die Positionierung der Messvolumen entlang der Messstrecke, die Komponente der Messstrecke in der Messrohrquerschnittsebene und die im Gesamtvolumen enthaltenen Anteile der Messrohrwand und des Mediums gewährleisten zusammen, dass in zwei aufeinanderfolgenden Messvolumen das Verhältnis der Volumen von Messrohrwand und Medium unterschiedlich ist.

Die Veränderung der Echosignale zwischen zwei aufeinanderfolgenden Messvolumen ist entlang der Messstrecke immer dann abrupt, wenn die Eigenschaften der Gesamtheit der in den beiden aufeinanderfolgenden Messvolumen vorhandenen Substanzen unterschiedlich sind. Die abrupten Veränderungen der Echosignale können auch als entsprechend abrupte Veränderungen der Steigungen der Echosignale beschrieben werden. Die Substanzen, aus denen das Messrohr besteht, besitzen keine Wasserstoffatome und werden von den Anregungssignalen folglich nicht angeregt. Bei den Ablagerungen sind mineralische und paraffinische Ablagerungen sowie Hydrate, insbesondere Methanhydrat, zu unterscheiden, wobei paraffinische Ablagerungen auch als wachsartige Ablagerungen bezeichnet werden. Mineralische Ablagerungen wie zum Beispiel kalkartige Ablagerungen besitzen keine Wasserstoffatome und werden deshalb von den Anregungssignalen auch nicht angeregt, wohingegen paraffinische Ablagerungen und Hydrate Wasserstoffatome besitzen und deshalb von den Anregungssignalen auch neben dem Medium angeregt werden. Die Spin-Spin-Relaxationszeitkonstanten und die Spin-Gitter-Relaxationszeitkonstanten der paraffinischen Ablagerungen und Hydrate unterscheiden sich von denen des Mediums aufgrund der höheren Viskosität der paraffinischen Ablagerungen und Hydrate im Vergleich zum Medium.

Zur Erläuterung des erfindungsgemäßen Verfahrens werden im Folgenden drei Konfigurationen von Ablagerungen auf der Messrohrinnenfläche betrachtet, und zwar die Messrohrinnenfläche ohne Ablagerungen, die Messrohrinnenfläche mit mineralischen Ablagerungen und die Messrohrinnenfläche mit paraffinischen Ablagerungen oder Hydraten. Die drei Konfigurationen sind Extremfälle. Oftmals werden die Ablagerungen auch eine Kombination aus mineralischen Ablagerungen, paraffinischen Ablagerungen und Hydraten sein.

Sind auf der Messrohrinnenfläche keine Ablagerungen vorhanden, wird von dem erfindungsgemäßen Verfahren nur eine abrupte Veränderung der Echosignale detektiert. Die abrupte Veränderung ist auf der Messstrecke an der Position des Übergangs zwischen der Messrohrinnenwand und dem Medium und entsteht, weil die Messrohrwand im Gegensatz zum Medium nicht von den Anregungssignalen angeregt wird. Die Position des Übergangs bestimmt einen Teil der Grenzfläche.

Sind mineralische Ablagerungen auf der Messrohrinnenfläche vorhanden, wird von dem erfindungsgemäßen Verfahren ebenfalls nur eine abrupte Veränderung der Echosignale detektiert. Die abrupte Veränderung ist auf der Messstrecke an der Position des Übergangs zwischen den Ablagerungen und dem Medium und entsteht, weil die mineralischen Ablagerungen im Gegensatz zum Medium nicht von den Anregungssignalen angeregt werden. Die Position des Übergangs bestimmt einen Teil der Grenzfläche.

Sind hingegen paraffinische Ablagerungen oder Hydrate auf der Messrohrinnenfläche vorhanden - im Folgenden soll nur von paraffinischen Ablagerungen gesprochen werden, wobei immer auch Hydrate mit umfasst sind - wird von dem erfindungsgemäßen Verfahren eine erste abrupte Veränderung der Echosignale und eine zweite abrupte Veränderung der Echosignale detektiert. Die erste abrupte Veränderung ist auf der Messstrecke an der Position des Übergangs zwischen der Messrohrinnenwand und den paraffinischen Ablagerungen und entsteht, weil die Messrohrwand im Gegensatz zu den paraffinischen Ablagerungen nicht von den Anregungssignalen angeregt wird. Die zweite abrupte Veränderung ist an der Position des Übergangs zwischen den paraffinischen Ablagerungen und dem Medium und entsteht, weil sowohl die paraffinischen Ablagerungen als auch das Medium von den Anregungssignalen angeregt werden, die Echosignale der paraffinischen Ablagerungen aber von den Echosignalen des Mediums verschieden sind. Demnach liefert das erfindungsgemäße Verfahren die Ausdehnung von paraffinischen Ablagerungen entlang der Messstrecke, wobei die Ausdehnung dem Abstand zwischen der Position der ersten abrupten Veränderung und der Position der zweiten abrupten Veränderung auf der Messstrecke entspricht. Die Position des zweiten Übergangs bestimmt einen Teil der Grenzfläche.

Das erfindungsgemäße Verfahren bestimmt demzufolge zumindest die Position eines in der Grenzfläche liegenden Punktes auf der Messstrecke. Da die Ausrichtung der Messstrecke im Messrohr, die Geometrie des Messrohrs und auch die gewöhnliche Verteilung der Ablagerungen an der Messrohrinnenfläche bekannt sind - für gewöhnlich lagern sich Ablagerungen gleichmäßig an der Messrohrinnenwand ab - kann die durch die Ablagerungen reduzierte Querschnittsfläche des Messrohrinnenraums aus der Position des in der Grenzfläche liegenden Punktes bestimmt werden. Insbesondere können mit dem erfindungsgemäßen Verfahren Veränderungen der Ausdehnung der Ablagerungen entlang der Messstrecke mit fortschreitender Zeit bestimmt werden.

In einer bevorzugten Ausgestaltung des erfindungsgemäßen Verfahrens ist vorgesehen, dass die Messvolumen derart entlang der Messstrecke positioniert und in der Größe eingestellt werden, dass die Fläche des Gesamtmessvolumens in der Messrohrquerschnittsebene zumindest die Messrohrquerschnittsfläche vollständig abdeckt.

Zusätzlich können die Messvolumen derart schichtförmig ausgebildet werden, dass sich jedes der Messvolumen zwischen jeweils einer ersten Ebene und jeweils einer zweiten Ebene erstreckt, wobei die Ebenen senkrecht zur Messstrecke ausgerichtet sind. Ein derartiges schichtförmiges Messvolumen kann gebildet werden, in dem die magnetische Flussdichte des Magnetfelds entlang der Messstrecke mit einem Gradienten versehen wird und die Anregungssignale ein Spektrum aufweisen. Da eine Anregung der im Magnetfeld präzessierenden magnetischen Momente nur mit Anregungssignalen erfolgen kann, deren Frequenz die Larmorfrequenz ist und da die Larmorfrequenz proportional zur magnetischen Flussdichte ist, kann auf diese Weise ein Messvolumen im Magnetfeld positioniert und eine Größe eingestellt werden.

Die Echosignale einer kernmagnetischen Messung in einem Messvolumen sind stets ein Mittelwert über das Messvolumen. Die Einstellung der Ausdehnung der Messvolumen entlang der Messstrecke korrespondiert daher mit der Auflösung der Echosignale entlang der Messstrecke. Werden geringe Ausdehnungen der Messvolumen entlang der Messstrecke gewählt, ist die Position der abrupten Übergänge entsprechend genau auf der Messstrecke bestimmbar.

In einer weiteren bevorzugten Ausgestaltung des erfindungsgemäßen Verfahrens wird aus der Position der mindestens einen abrupten Veränderung der Echosignale und der Position des Schnittpunkts der Messstrecke mit der Messrohrinnenwand die Ausdehnung der Ablagerungen entlang der Messstrecke bestimmt. Da sowohl mineralische Ablagerungen als auch die Messrohrwand nicht von den Anregungssignalen angeregt werden, werden weder in den mineralischen Ablagerungen noch in der Messrohrwand Echosignale hervorgerufen. Infolgedessen gibt es auch keine abrupte Veränderung der Echosignale, welche die Position des Übergangs zwischen den mineralischen Ablagerungen und der Messrohrinnenwand auf der Messstrecke kennzeichnet. Bei paraffinischen Ablagerungen kann, wie bereits ausgeführt worden ist, die Position des Übergangs zwischen den paraffinischen Ablagerungen und der Messrohrinnenwand auf der Messstrecke auch ohne Kenntnis des Schnittpunkts der Messstrecke mit der Messrohrinnenwand bestimmt werden. Die Position der ersten abrupten Veränderung der Echosignale entspricht der Position des Schnittpunkts der Messstrecke mit der Messrohrinnenwand. Jedoch kann auch diese Ausgestaltung des erfindungsgemäßen Verfahrens bei paraffinischen Ablagerungen verwendet werden.

Die Position des Schnittpunkts der Messstrecke mit der Messrohrinnenwand kann bestimmt werden, indem die mindestens eine abrupte Veränderung der Echosignale bei dem Messrohr ohne Ablagerungen bestimmt wird. Erfolgt die Bestimmung des Schnittpunkts unmittelbar nach der ersten Inbetriebnahme des kernmagnetischen Durchflussmessgeräts, sind noch keine Ablagerungen an der Messrohrinnenwand vorhanden und es wird nur ein abrupter Übergang der Echosignale detektiert. Die Position des abrupten Übergangs auf der Messstrecke entspricht der Position des Schnittpunkts der Messstrecke mit der Messrohrinnenwand.

Die mindestens eine abrupte Veränderung der Echosignale entlang der Messstrecke kann durch unterschiedliche Detektionsverfahren detektiert werden. Im Folgenden werden vier Detektionsverfahren beschrieben. Jedes der Detektionsverfahren für sich bildet das erfindungsgemäße Verfahren weiter, es kann aber auch in beliebiger Kombination mit den übrigen Detektionsverfahren verwendet werden.

In einem ersten Detektionsverfahren wird die mindestens eine abrupte Veränderung der Echosignale entlang der Messstrecke detektiert, indem aus den Echosignalen Amplituden bestimmt werden und die mindestens eine abrupte Veränderung der Amplituden entlang der Messstrecke detektiert wird.

In einem zweiten Detektionsverfahren wird die mindestens eine abrupte Veränderung der Echosignale entlang der Messstrecke detektiert, indem die kernmagnetischen Messungen zur Bestimmung von Spin-Gitter-Relaxationszeitkonstanten ausgelegt werden, aus den Echosignalen Spin-Gitter-Relaxationszeitkonstanten bestimmt werden und die mindestens eine abrupte Veränderung der Spin-Gitter-Relaxationszeitkonstanten entlang der Messstrecke detektiert wird.

In einem dritten Detektionsverfahren wird die mindestens eine abrupte Veränderung der Echosignale entlang der Messstrecke detektiert, indem die kernmagnetischen Messungen zur Bestimmung von Spin-Spin-Relaxationszeitkonstanten ausgelegt werden, aus den Echosignalen Spin-Spin-Relaxationszeitkonstanten bestimmt werden und die mindestens eine abrupte Veränderung der Spin-Spin-Relaxationszeitkonstanten entlang der Messstrecke detektiert wird.

In einem vierten Detektionsverfahren wird die mindestens eine abrupte Veränderung der Echosignale entlang der Messstrecke detektiert, indem die kernmagnetischen Messungen zur Bestimmung von Geschwindigkeiten des Mediums ausgelegt werden, aus den Echosignalen Geschwindigkeiten bestimmt werden und die mindestens eine abrupte Veränderung der Geschwindigkeiten entlang der Messstrecke detektiert wird.

Allen vier beschriebenen Detektionsverfahren gemein ist, dass sie zumindest die Position eines in der Grenzfläche zwischen dem strömenden Medium auf der einen Seite und dem stillstehenden Messrohr und den stillstehenden Ablagerungen auf der anderen Seite liegenden Punktes auf der Messstrecke bestimmen, wobei die Position durch die mindestens eine abrupte Veränderung der jeweiligen Größe gekennzeichnet ist. Die Detektion der Grenzfläche ist unabhängig davon, ob es sich bei den Ablagerungen um mineralische und/oder paraffinische Ablagerungen handelt.

Darüber hinaus detektieren das erste, das zweite und das dritte Detektionsverfahren bei paraffinischen Ablagerungen auch noch eine zweite abrupte Veränderung der jeweiligen Größe. Die zweite abrupte Veränderung der jeweiligen Größe ist an der Position des Übergangs zwischen den paraffinischen Ablagerungen und der Messrohrwand. Demnach liefern das erste, das zweite und das dritte Detektionsverfahren die Ausdehnung von paraffinischen Ablagerungen entlang der Messstrecke.

In einer weiteren bevorzugten Ausgestaltung des erfindungsgemäßen Verfahrens ist vorgesehen, dass die mindestens eine abrupte Veränderung der Echosignale entlang mindestens einer weiteren Messstrecke detektiert wird. Da durch die mindestens eine abrupte Veränderung der Echosignale entlang jeder der Messstrecken zumindest ein Teil der Grenzfläche bestimmt wird, wird die Grenzfläche durch eine Mehrzahl von Messstrecken kartographiert. Handelt es sich um paraffinische Ablagerungen, wird durch die abrupten Veränderungen der Echosignale entlang jeder der Messstrecken auch die Messrohrinnenfläche kartographiert. Aus der Grenzfläche und der Messrohrinnenfläche können die räumlichen Ausdehnungen der paraffinischen Ablagerungen bestimmt werden.

Bei dem erfindungsgemäßen Verfahren können mindestens jeweils zwei der Messstrecken auf einer Achse gegenüberliegend angeordnet werden. Diese Anordnung vereinfacht und beschleunigt das Messverfahren, da nur die Hälfte der Messstrecken positioniert werden muss. Darüber hinaus wird bei der Anordnung von zwei Messstrecken gegenüberliegend auf einer Achse unmittelbar der Abstand der Grenzfläche entlang der Achse bestimmt. Aus dem Abstand der Grenzfläche kann auf die Querschnittsfläche des Messrohrinnenraums und damit auf den Strömungswiderstand geschlossen werden.

Die der Erfindung zugrunde liegende, eingangs aufgezeigte Aufgabe ist ferner dadurch gelöst, dass mit der Messeinrichtung eine tomographische Messung über den gesamten Messrohrquerschnitt durchgeführt wird, dass pixelweise die Amplituden der Echosignale bestimmt werden und dass in den pixelweise bestimmten Amplituden der Echosignale mindestens zwei abrupte Veränderungen der Amplituden der Echosignale über den Messrohrquerschnitt detektiert werden.

Wie bereits ausgeführt, ist eine Änderung der Echosignale - vorliegend der Amplituden der Echosignale - immer dann abrupt, wenn sich die Eigenschaften der gemessenen Substanzen verändern, also insbesondere dann, wenn sich die Substanz verändert.

Das erfindungsgemäße Verfahren bietet den Vorteil, mit einer einzigen tomographischen Messung über den gesamten Messrohrquerschnitt den Zustand des Messrohres zu charakterisieren, insbesondere Ablagerungen an der Messrohrinnenwand zu detektieren.

Erfindungsgemäß sind nun verschiedene Möglichkeiten vorgesehen, das erfindungsgemäße Verfahren konkreter auszugestalten.

In einer bevorzugten Ausführungsform ist vorgesehen, die Amplituden der Echosignale pixelweise entlang einer Sekante des Messrohrquerschnitts zu bestimmen. Insbesondere bietet es sich an, die Amplituden der Echosignale pixelweise entlang einer Zentralen des Messrohrquerschnitts zu bestimmen.

Das Messrohr weist - wie bereits ausgeführt - keine Wasserstoffatome auf, die durch die Anregungssignale angeregt werden können. Demnach senden sie auch keine Echosignale aus, die detektiert werden können, die gemessene Amplitude ist also null. Befinden sich mineralische Ablagerungen auf der Messrohrinnenwand, die ebenfalls keine Wasserstoffatome beinhalten, ist die Amplitude der gemessenen Echosignale im Bereich der mineralischen Ablagerungen ebenfalls null. Bei einem Übergang von der Messrohrinnenwand oder mineralischen Ablagerungen zum das Messrohr durchströmenden Medium ergibt sich eine abrupte Veränderung in der Amplitude des gemessenen Echosignals, da das Medium wasserstoffhaltige Phasen aufweist. Bei dem Übergang zwischen Messrohr oder mineralischen Ablagerungen und Medium wird demnach eine erste abrupte Veränderung der Amplituden der Echosignale detektiert. Verfolgt man die Amplituden der Echosignale weiter entlang der Sekanten bzw. Zentralen, kommt es zu einer zweiten abrupten Veränderung der Amplituden der Messsignale genau dann, wenn entlang der Sekanten gesehen ein weiterer Übergang von wasserstoffatomhaltigem Medium zu mineralischen Ablagerungen oder Messrohr erfolgt.

Befinden sich paraffinische Ablagerungen oder Hydrate, insbesondere Methanhydrat - fortlaufend zusammenfassend als paraffinische Ablagerungen bezeichnet - auf der Messrohrinnenwand, wird von dem erfindungsgemäßen Verfahren entlang einer Sekanten des Messrohrquerschnitts eine erste abrupte Veränderung der Amplituden der Echosignale genau dann detektiert, wenn ein Übergang zwischen Messrohr und paraffinischen Ablagerungen erfolgt. Die abrupte Veränderung entsteht, weil die Messrohrwand im Gegensatz zu den paraffinischen Ablagerungen nicht von den Anregungssignalen angeregt wird. Eine zweite abrupte Veränderung in den Amplituden der Echosignale wird bei dem Übergang von paraffinischen Ablagerungen zu dem das Messrohr durchströmenden Medium detektiert. Sowohl die paraffinischen Ablagerungen als auch das Medium beinhalten von den Anregungssignalen anregbare Wasserstoffatome, so dass sowohl von den paraffinischen Ablagerungen als auch von dem Medium Echosignale ausgesendet werden, jedoch unterscheiden sich die Echosignale in ihrer Amplitude, so dass eine abrupte Veränderung in der Amplitude detektierbar ist.

Eine dritte und eine vierte abrupte Veränderung der Amplituden der Echosignale lassen sich entlang der Sekanten an den Stellen detektieren, an denen sich zum einen der Übergang von dem Medium zu den paraffinischen Ablagerungen und zum anderen der Übergang von den paraffinischen Ablagerungen zum Messrohr befindet.

Eine weitere bevorzugte Ausführungsform des erfindungsgemäßen Verfahrens sieht vor, dass die Amplituden der Echosignale pixelweise über den gesamten Messrohrquerschnitt bestimmt werden. Auch bei der erfindungsgemäßen Ausführungsform lassen sich abrupte Veränderungen in den Amplituden der Echosignale über den Messrohrquerschnitt detektieren.

Das erfindungsgemäße Verfahren bestimmt die Positionen der Übergänge zweier Substanzen, insbesondere den Übergang von dem durch das Messrohr strömenden Medium zu den Ablagerungen und bei paraffinischen Ablagerungen zudem die Position des Übergangs zwischen paraffinischen Ablagerungen und Messrohr.

Mit dem erfindungsgemäßen Verfahren kann demnach die Ausdehnung der Ablagerungen an der Messrohrwand bestimmt werden. Befinden sich paraffinische Ablagerungen an der Messrohrwand und wird angenommen, dass sich die Ablagerungen gleichmäßig an der Messrohrwand ablagern, ist die Ausdehnung der Ablagerungen bei der Bestimmung der Amplituden der Echosignale entlang einer Sekanten, insbesondere einer Zentralen des Messrohrquerschnitts durch den Abstand zwischen der ersten und der zweiten und/oder dem Abstand zwischen der dritten und der vierten abrupten Veränderung der Echoamplituden eindeutig bestimmt. Insbesondere ist hierbei zu beachten, dass die Lage der Sekanten im Messrohrquerschnitt bei der Bestimmung der Ausdehnung der Ablagerungen zu berücksichtigen ist.

Befinden sich mineralische Ablagerungen an der Messrohrinnenwand, lässt sich die Ausdehnung der Ablagerungen bestimmen, indem der durch die Ablagerungen reduzierte Durchmesser des Messrohres durch den Abstand der Positionen der ersten und der zweiten abrupten Änderung der Echoamplituden entlang einer Sekanten, insbesondere einer Zentralen des Messrohrquerschnitts bestimmt wird. Bei bekanntem Durchmesser des Messrohres ohne Ablagerungen folgt aus der Differenz zwischen eigentlichem und reduziertem Durchmesser die Ausdehnung der Ablagerungen.

Werden die Amplituden der Echosignale über den gesamten Messrohrquerschnitt bestimmt, kann - im Fall von mineralischen Ablagerungen - ebenfalls der reduzierte Durchmesser des Messrohres und damit die Ausdehnung der mineralischen Ablagerungen ermittelt werden.

Liegen paraffinische Ablagerungen vor, ergibt sich die Ausdehnung der paraffinischen Ablagerungen an der Messrohrwand direkt aus der Verteilung der Amplituden der Echosignale über den Messrohrquerschnitt.

Durch die Bestimmung der Amplituden der Echosignale über den gesamten Messrohrquerschnitt sowie die Bestimmung der Positionen der abrupten Veränderungen der Amplituden der Echosignale im gesamten Messrohrquerschnitt lassen sich insbesondere auch ungleichmäßig verteilte Ablagerungen an der Messrohrwand eindeutig bestimmen.

Insbesondere bietet sich das erfindungsgemäße Verfahren an, um Veränderungen der Ausdehnung der Ablagerungen mit fortschreitender Zeit zu bestimmen.

In einer besonders bevorzugten Ausführungsform des erfindungsgemäßen Verfahrens ist vorgesehen, dass mindestens eine weitere tomographische Messung über die gesamte Messrohrquerschnittsfläche durchgeführt wird, wobei die Messungen zeitlich versetzt durchgeführt werden, dass die Echosignale der mindestens einen weiteren Messung pixelweise bestimmt werden und dass anhand der zeitlichen Änderungen der Echosignale identischer Pixel pixelweise die Relaxationszeiten und/oder die Durchflussgeschwindigkeit des Mediums bestimmt werden.

Hierbei kann die Bestimmung der Amplituden der Echosignale ebenfalls entlang einer Sekanten, insbesondere entlang einer Zentralen des Messrohrquerschnitts oder über den gesamten Messrohrquerschnitt erfolgen.

Bei den oben ausgeführten Ausführungsformen des erfindungsgemäßen Verfahrens können verschiedene Varianten zur Kodierung der für die Tomographie notwendigen Ortsinformation vorgesehen sein.

So kann ein Gradientenfeld bereits vor der Anregung des Mediums durch den Anregungspuls angelegt werden. Dann präzessieren die Kernspins bereits vor der Anregung ortsabhängig mit verschiedenen Lamorfrequenzen; durch die Pulsbreite des Anregungspulses kann ein bestimmter Teil der Spins ausgewählt werden, der angeregt wird. Es liegt also eine selektive Anregung des Mediums vor, demnach sendet auch nur der selektierte Teil ein Echosignal aus.

Ebenfalls denkbar ist es, die Ortsinformation durch eine Phasenverschiebung der Spins zu kodieren. Ein Gradientenfeld wird zwischen der Anregung des Mediums durch einen Anregungspuls und dem Messen der von dem Medium generierten Echosignale für ein bestimmtes Zeitintervall angelegt. Durch das Gradientenfeld wird die Präzessionsfrequenz ortsabhängig verändert, da die Lamorfrequenz proportional zur Magnetfeldstärke ist. Wird das Gradientenfeld wieder abgeschaltet, präzessieren die Spins wieder mit ihrer "ursprünglichen" Frequenz, jedoch hat es eine ortsabhängige Änderung der Phasenlage der angeregten Spins gegeben, man spricht von Phasenkodierung.

Auch kann vorgesehen sein, dass die Spins durch einen Anregungspuls angeregt werden und anschließend ein Gradientenfeld während des Auslesens angelegt wird ("Auslesegradientenfeld"). Das führt dazu, dass die Spins während der Messung Signale mit ortsabhängig unterschiedlichen Frequenzen aussenden. Das gemessene "Frequenzgemisch" kann durch eine FourierTransformation dekodiert werden. Eine Kodierung der Ortsinformation ist also auch über die Frequenz möglich, man spricht von Frequenzkodierung.

## Patentansprüche

1. Verfahren zum Betreiben eines kernmagnetischen Durchflussmessgeräts, mit einem von einem Medium durchströmbaren Messrohr und mit einer zur Bestimmung des Durchflusses des Mediums durch das Messrohr ausgebildeten Messeinrichtung,
wobei die Messeinrichtung eine Magnetfelderzeugungseinrichtung zur Erzeugung eines das Medium und das Messrohr durchsetzenden Magnetfeldes aufweist und zur Durchführung von kernmagnetischen Messungen in positionierbaren und in der Größe einstellbaren Messvolumen im Magnetfeld ausgebildet ist und
wobei jede kernmagnetische Messung das Einstellen der Größe des Messvolumens, die Positionierung des Messvolumens, die Erzeugung von das Medium anregenden Anregungssignalen, die Aussendung der Anregungssignale in das Messvolumen und die Messung der von den Anregungssignalen hervorgerufenen Echosignale umfasst,
**dadurch gekennzeichnet,**
**dass** eine erste kernmagnetische Messung in einem Messvolumen durchgeführt wird und mindestens eine zweite kernmagnetische Messung in einem weiteren Messvolumen durchgeführt wird, indem die Messvolumen derart nacheinander entlang einer eine Komponente in der Messrohrquerschnittsebene aufweisenden Messstrecke positioniert werden, dass das von den Messvolumina gebildete Gesamtmessvolumen mindestens einen Anteil der Messrohrwand und mindestens einen Anteil des Mediums enthält, und
**dass** die Echosignale aller kernmagnetischen Messungen der Position des Messvolumens der jeweiligen kernmagnetischen Messung auf der Messstrecke zugeordnet werden und mindestens eine abrupte Veränderung der Echosignale entlang der Messstrecke detektiert wird.

2. Verfahren nach Anspruch 1, **dadurch gekennzeichnet, dass** die Messvolumen derart entlang der Messstrecke positioniert und in der Größe eingestellt werden, dass die Fläche des Gesamtmessvolumens in der Messrohrquerschnittsebene zumindest die Messrohrquerschnittsfläche vollständig abdeckt.

3. Verfahren nach Anspruch 1 oder 2, **dadurch gekennzeichnet, dass** die Messvolumen derart schichtförmig ausgebildet werden, dass sich jedes der Messvolumen zwischen jeweils einer ersten Ebene und jeweils einer zweiten Ebene erstreckt, wobei die Ebenen senkrecht zur Messstrecke ausgerichtet sind.

4. Verfahren nach einem der Ansprüche 1 bis 3, **dadurch gekennzeichnet, dass** aus der Position der mindestens einen abrupten Veränderung der Echosignale und der Position des Schnittpunkts der Messstrecke mit der Messrohrinnenwand die Ausdehnung von Ablagerungen entlang der Messstrecke bestimmt wird.

5. Verfahren nach einem der Ansprüche 1 bis 4, **dadurch gekennzeichnet, dass** die Position des Schnittpunkts der Messstrecke mit der Messrohrinnenwand bestimmt wird, indem die mindestens eine abrupte Veränderung der Echosignale bei dem Messrohr ohne Ablagerungen bestimmt wird.

6. Verfahren nach einem der Ansprüche 1 bis 5, **dadurch gekennzeichnet, dass** die mindestens eine abrupte Veränderung der Echosignale entlang der Messstrecke detektiert wird, indem aus den Echosignalen Amplituden bestimmt werden und die mindestens eine abrupte Veränderung der Amplituden entlang der Messstrecke detektiert wird.

7. Verfahren nach einem der Ansprüche 1 bis 6, **dadurch gekennzeichnet, dass** die mindestens eine abrupte Veränderung der Echosignale entlang der Messstrecke detektiert wird, indem die kernmagnetischen Messungen zur Bestimmung von Spin-Gitter-Relaxationszeitkonstanten ausgelegt werden, aus den Echosignalen Spin-Gitter-Relaxationszeitkonstanten bestimmt werden und die mindestens eine abrupte Veränderung der Spin-Gitter-Relaxationszeitkonstanten entlang der Messstrecke detektiert wird.

8. Verfahren nach einem der Ansprüche 1 bis 7, **dadurch gekennzeichnet, dass** die mindestens eine abrupte Veränderung der Echosignale entlang der Messstrecke detektiert wird, indem die kernmagnetischen Messungen zur Bestimmung von Spin-Spin-Relaxationszeitkonstanten ausgelegt werden, aus den Echosignalen Spin-Spin-Relaxationszeitkonstanten bestimmt werden und die mindestens eine abrupte Veränderung der Spin-Spin-Relaxationszeitkonstanten entlang der Messstrecke detektiert wird.

9. Verfahren nach einem der Ansprüche 1 bis 8, **dadurch gekennzeichnet, dass** die mindestens eine abrupte Veränderung der Echosignale entlang der Messstrecke detektiert wird, indem die kernmagnetischen Messungen zur Bestimmung von Geschwindigkeiten des Mediums ausgelegt werden, aus den Echosignalen Geschwindigkeiten bestimmt werden und die mindestens eine abrupte Veränderung der Geschwindigkeiten entlang der Messstrecke detektiert wird.

10. Verfahren nach einem der Ansprüche 1 bis 9, **dadurch gekennzeichnet, dass** die mindestens eine abrupte Veränderung der Echosignale entlang mindestens einer weiteren Messstrecke detektiert wird.

11. Verfahren nach Anspruch 10, **dadurch gekennzeichnet, dass** mindestens jeweils zwei der Messstrecken auf einer Achse gegenüberliegend angeordnet werden.

12. Verfahren zum Betreiben eines kernmagnetischen Durchflussmessgeräts, mit einem von einem Medium durchströmbaren Messrohr und mit einer zur Bestimmung des Durchflusses des Mediums durch das Messrohr ausgebildeten Messeinrichtung,
wobei die Messeinrichtung eine Magnetfelderzeugungseinrichtung zur Erzeugung eines das Medium und das Messrohr durchsetzenden Magnetfeldes aufweist und zur Durchführung von kernmagnetischen Messungen in positionierbaren und in der Größe einstellbaren Messvolumen im Magnetfeld ausgebildet ist und
wobei jede kernmagnetische Messung das Einstellen der Größe des Messvolumens, die Positionierung des Messvolumens, die Erzeugung von das Medium anregenden Anregungssignalen, die Aussendung der Anregungssignale in das Messvolumen und die Messung der von den Anregungssignalen hervorgerufenen Echosignale umfasst,
**dadurch gekennzeichnet, dass** mindestens eine tomographische Messung über den gesamten Messrohrquerschnitt durchgeführt wird,
dass pixelweise die Amplituden der Echosignale aus der mindestens einen tomographischen Messung bestimmt werden
und dass in den pixelweise bestimmten Amplituden der Echosignale mindestens zwei abrupte Veränderungen der Amplituden der Echosignale über den Messrohrquerschnitt detektiert werden.

13. Verfahren nach Anspruch 12, **dadurch gekennzeichnet, dass** die Amplituden der Echosignale pixelweise entlang einer Sekanten des Messrohrquerschnitts bestimmt werden, insbesondere entlang einer Zentralen des Messrohrquerschnitts bestimmt werden.

14. Verfahren nach Anspruch 12, **dadurch gekennzeichnet, dass** die Amplituden der Echosignale über den gesamten Messrohrquerschnitt bestimmt werden.

15. Verfahren nach einem der Ansprüche 12 bis 14, **dadurch gekennzeichnet, dass** aus den Positionen der abrupten Veränderungen der Amplituden der Echosignale die Ausdehnung von Ablagerungen an der Messrohrinnenwand bestimmt wird.

16. Verfahren nach einem der Ansprüche 12 bis 15, **dadurch gekennzeichnet, dass** mindestens eine weitere tomographische Messung über die gesamte Messrohrquerschnittsfläche durchgeführt wird, wobei die Messungen zeitlich versetzt durchgeführt werden,
dass die Echosignale der mindestens einen weiteren Messung pixelweise bestimmt werden
und dass anhand der zeitlichen Änderungen der Echosignale identischer Pixel pixelweise die Relaxationszeiten und/oder die Durchflussgeschwindigkeit des Mediums bestimmt werden.

17. Verfahren nach einem der Ansprüche 12 bis 16, **dadurch gekennzeichnet, dass** die Ortsinformation für die tomographische Messung durch Phasenkodierung oder durch Frequenzkodierung generiert wird.

## Claims

1. Method for operating a nuclear magnetic flowmeter having a measuring tube that can have medium flowing through it and having a measuring device designed for determining the flow of the medium through the measuring tube,
wherein the measuring device has a magnetic field generator for generating a magnetic field interfusing the medium and the measuring tube and is designed for carrying out nuclear magnetic measurements of measuring volumes adjustable in position and size in the magnetic field, and
wherein each of the nuclear magnetic measurements includes adjusting the size of the measuring volume, positioning the measuring volume, generating excitation signals for exciting the medium, transmitting excitation signals into the measuring volume and measuring echo signals caused by the excitation signals,
**characterized in**
**that** a first nuclear magnetic measurement is carried out in a measuring volume and at least one second nuclear magnetic measurement is carried out in at least one further measuring volume, in that the measuring volumes are positioned one after the other along a measuring section having a component in the measuring tube cross section plane in such a manner that the total measuring volume formed from the measuring volumes contains at least a portion of the measuring tube wall and at least a portion of the medium, and that the echo signals of all nuclear magnetic measurements are assigned to the position of the measuring volume of the respective nuclear magnetic measurement at the measuring section and at least one abrupt change in the echo signals is detected along the measuring section.

2. Method according to claim 1, **characterized in that** the measuring volumes are positioned along the measuring section and adjusted in size in such a manner that the area of the total measuring volume in the measuring tube cross section plane completely covers at least the measuring tube cross section area.

3. Method according to claim 1 or 2, **characterized in that** the measuring volume is designed in layers in such a manner that each of the measuring volumes extends between a respective first plane and a respective second plane, wherein the planes are oriented perpendicular to the measuring section.

4. Method according to any one of claims 1 to 3, **characterized in that** the expansion of deposits along the measuring section are determined from the position of the at least one abrupt change of the echo signals and the position of the intersection of the measuring section with the measuring tube inner wall.

5. Method according to any one of claims 1 to 4, **characterized in that** the position of the intersection of the measuring section with the measuring tube inner wall is determined **in that** the at least one abrupt change of the echo signals is determined in the measuring tube without deposits.

6. Method according to any one of claims 1 to 5, **characterized in that** the at least one abrupt change of the echo signals along the measuring section is detected **in that** amplitudes are determined from the echo signals and the at least one abrupt change in the amplitudes along the measuring section is detected.

7. Method according to any one of claims 1 to 6, **characterized in that** the at least one abrupt change of the echo signals along the measuring section is detected **in that** the nuclear magnetic measurements are designed for determining the spin-lattice relaxation time constant, spin-lattice relaxation time constants are determined from the echo signals and the at least one abrupt change of the spin-lattice relaxation time constant is determined along the measuring section.

8. Method according to any one of claims 1 to 7, **characterized in that** the at least one abrupt change of the echo signals is determined along the measuring section **in that** the nuclear magnetic measurements are designed for determining spin-spin relaxation time constants, spin-spin relaxation time constants are determined from the echo signals and the at least one abrupt change of the spin-spin relaxation time constants is detected along the measuring section.

9. Method according to any one of claims 1 to 8, **characterized in that** the at least one abrupt change of the echo signals is detected along the measuring section **in that** the nuclear magnetic measurements are designed for determining velocities of the medium, velocities are determined from the echo signals and the at least one abrupt change of the velocities is detected along the measuring section.

10. Method according to any one of claims 1 to 9, **characterized in that** the at least one abrupt change of the echo signals is detected along at least one further measuring section.

11. Method according to claim 10, **characterized in that** at least respectively two of the measuring sections are arranged opposite one another on an axis.

12. Method for operating a nuclear magnetic flowmeter having a measuring tube that can have medium flowing through it and having a measuring device designed for determining the flow of the medium through the measuring tube,
wherein the measuring device has a magnetic field generator for generating a magnetic field interfusing the medium and the measuring tube and is designed for carrying out nuclear magnetic measurements of measuring volumes adjustable in position and size in the magnetic field, and
wherein each of the nuclear magnetic measurements includes adjusting the size of the measuring volume, positioning the measuring volume, generating excitation signals for exciting the medium, transmitting excitation signals into the measuring volume and measuring echo signals caused by the excitation signals,
**characterized in**
**that** at least one tomographic measurement is carried out over the entire measuring tube cross section,
**that** the amplitudes of the echo signals are determined pixel-by-pixel from the at least one tomographic measurement
and **that** at least two abrupt changes of the amplitudes of the echo signals over the measuring tube cross section are detected in the amplitudes of the echo signals determined pixel-by-pixel.

13. Method according to claim 12, **characterized in that** the amplitudes of the echo signals are determined pixel-by-pixel along a secant of the measuring tube cross section, in particular along a diameter, of the measuring tube cross section.

14. Method according to claim 12, **characterized in that** the amplitudes of the echo signals are determined over the entire measuring tube cross section.

15. Method according to any one of claims 12 to 14, **characterized in that** the expansion of the deposits on the inner wall of the measuring tube are determined using the positions of the abrupt changes of amplitude of the echo signals.

16. Method according to any one of claims 12 to 15, **characterized in that** at least one further tomographic measurement is carried out over the entire measuring tube cross section, wherein the measurements are staggered over time,
that the echo signals of the at least one further measurement are determined pixel-by-pixel
and that the relaxation time and/or flow velocity of the medium is determined using the changes of the echo signals of identical pixels over time.

17. Method according to any one of claims 12 to 16, **characterized in that** the location information for the tomographic measurements is generated using phase encoding or frequency encoding.

## Revendications

1. Procédé d'exploitation d'un débitmètre magnétique nucléaire, comprenant un tube de mesure qu'un fluide peut parcourir et un dispositif de mesure réalisé pour déterminer le débit du fluide à travers le tube de mesure,
dans lequel le dispositif de mesure présente un dispositif de génération de champ magnétique pour produire un champ magnétique traversant le fluide et le tube de mesure et est réalisé pour effectuer des mesures magnétiques nucléaires dans des volumes de mesure dans le champ magnétique, pouvant être positionnés et dont la dimension est réglable, et
dans lequel chaque mesure magnétique nucléaire comprend le réglage de la dimension du volume de mesure, le positionnement du volume de mesure, la génération de signaux d'excitation excitant le fluide, l'émission des signaux d'excitation dans le volume de mesure et la mesure des signaux d'écho provoqués par les signaux d'excitation,
**caractérisé**
**en ce qu'**une première mesure magnétique nucléaire est effectuée dans un volume de mesure et au moins une deuxième mesure magnétique nucléaire est effectuée dans un autre volume de mesure en positionnant les volumes de mesure successivement le long d'une voie de mesure présentant un composant dans le plan de section transversale de tube de mesure de telle sorte que le volume de mesure total formé par les volumes de mesure contient au moins une partie de la paroi de tube de mesure et au moins une partie du fluide, et
**en ce que** les signaux d'écho de toutes les mesures magnétiques nucléaires sont attribués à la position du volume de mesure de la mesure magnétique nucléaire respective sur la voie de mesure et au moins un changement brusque des signaux d'écho le long de la voie de mesure est détecté.

2. Procédé selon la revendication 1, **caractérisé en ce que** les volumes de mesure sont positionnés le long de la voie de mesure et leur dimension est réglée de telle sorte que la surface du volume de mesure total dans le plan de section transversale de tube de mesure recouvre complètement au moins la superficie de la section du tube de mesure.

3. Procédé selon la revendication 1 ou 2, **caractérisé en ce que** les volumes de mesure sont réalisés par couches de telle sorte que chacun des volumes de mesure s'étend entre respectivement un premier plan et respectivement un deuxième plan, les plans étant orientés perpendiculairement à la voie de mesure.

4. Procédé selon l'une quelconque des revendications 1 à 3, **caractérisé en ce que** l'étendue de dépôts le long de la voie de mesure est déterminée à partir de la position dudit au moins un changement brusque des signaux d'écho et de la position du point d'intersection de la voie de mesure avec la paroi intérieure de tube de mesure.

5. Procédé selon l'une quelconque des revendications 1 à 4, **caractérisé en ce que** la position du point d'intersection de la voie de mesure avec la paroi intérieure de tube de mesure est déterminée en déterminant ledit au moins un changement brusque des signaux d'écho sur le tube de mesure sans dépôts.

6. Procédé selon l'une quelconque des revendications 1 à 5, **caractérisé en ce que** ledit au moins un changement brusque des signaux d'écho est détecté le long de la voie de mesure en déterminant des amplitudes à partir des signaux d'écho et en détectant ledit au moins un changement brusque des amplitudes le long de la voie de mesure.

7. Procédé selon l'une quelconque des revendications 1 à 6, **caractérisé en ce que** ledit au moins un changement brusque des signaux d'écho est détecté le long de la voie de mesure en interprétant les mesures magnétiques nucléaires pour déterminer des constantes de temps de relaxation de spin-réseau, en déterminant des constantes de temps de relaxation de spin-réseau à partir des signaux d'écho, et en détectant ledit au moins un changement brusque des constantes de temps de relaxation de spin-réseau le long de la voie de mesure.

8. Procédé selon l'une quelconque des revendications 1 à 7, **caractérisé en ce que** ledit au moins un changement brusque des signaux d'écho est détecté le long de la voie de mesure en interprétant les mesures magnétiques nucléaires pour déterminer des constantes de temps de relaxation de spin-spin, en déterminant des constantes de temps de relaxation de spin-spin à partir des signaux d'écho, et en détectant ledit au moins un changement brusque des constantes de temps de relaxation de spin-spin le long de la voie de mesure.

9. Procédé selon l'une quelconque des revendications 1 à 8, **caractérisé en ce que** ledit au moins un changement brusque des signaux d'écho est détecté le long de la voie de mesure en interprétant les mesures magnétiques nucléaires pour déterminer des vitesses du fluide, en déterminant des vitesses à partir des signaux d'écho et en détectant ledit au moins un changement brusque des vitesses le long de la voie de mesure.

10. Procédé selon l'une quelconque des revendications 1 à 9, **caractérisé en ce que** ledit au moins un changement brusque des signaux d'écho est détecté le long d'au moins une autre voie de mesure.

11. Procédé selon la revendication 10, **caractérisé en ce que** respectivement au moins deux des voies de mesure sont disposées sur un axe en étant opposées l'une à l'autre.

12. Procédé d'exploitation d'un débitmètre magnétique nucléaire, comprenant un tube de mesure qu'un fluide peut parcourir et un dispositif de mesure réalisé pour déterminer le débit du fluide à travers le tube de mesure,
dans lequel le dispositif de mesure présente un dispositif de génération de champ magnétique pour produire un champ magnétique traversant le fluide et le tube de mesure et est réalisé pour effectuer des mesures magnétiques nucléaires dans des volumes de mesure dans le champ magnétique, pouvant être positionnés et dont la dimension est réglable, et
dans lequel chaque mesure magnétique nucléaire comprend le réglage de la dimension du volume de mesure, le positionnement du volume de mesure, la génération de signaux d'excitation excitant le fluide, l'émission des signaux d'excitation dans le volume de mesure et la mesure des signaux d'écho provoqués par les signaux d'excitation,
**caractérisé en ce que**
au moins une mesure tomographique est effectuée sur l'ensemble de la section transversale de tube de mesure,
les amplitudes des signaux d'écho sont déterminées pixel par pixel à partir de ladite au moins une mesure tomographique, et
dans les amplitudes des signaux d'écho, déterminées pixel par pixel, au moins deux changements brusques des amplitudes des signaux d'écho sont détectés sur la section transversale de tube de mesure.

13. Procédé selon la revendication 12, **caractérisé en ce que** les amplitudes des signaux d'écho sont déterminées pixel par pixel le long d'une sécante de la section transversale de tube de mesure, en particulier le long d'une ligne médiane de la section transversale de tube de mesure.

14. Procédé selon la revendication 12, **caractérisé en ce que** les amplitudes des signaux d'écho sont déterminées sur l'ensemble de la section transversale de tube de mesure.

15. Procédé selon l'une quelconque des revendications 12 à 14, **caractérisé en ce que** l'étendue de dépôts sur la paroi intérieure de tube de mesure est déterminée à partir des positions des changements brusques des amplitudes des signaux d'écho.

16. Procédé selon l'une quelconque des revendications 12 à 15, **caractérisé en ce que**
au moins une autre mesure tomographique est effectuée sur l'ensemble de la section transversale de tube de mesure, les mesures étant effectuées de manière décalée dans le temps,
les signaux d'écho de ladite au moins une autre mesure sont déterminés pixel par pixel, et
les temps de relaxation et/ou la vitesse d'écoulement du fluide sont déterminés pixel par pixel à l'aide des changements dans le temps des signaux d'écho de pixels identiques.

17. Procédé selon l'une quelconque des revendications 12 à 16, **caractérisé en ce que** les informations d'emplacement pour la mesure tomographique sont générées par codage de phase ou par codage de fréquence.
